(19) **Europäisches Patentamt**
**European Patent Office**
**Office européen des brevets**

(11) **EP 4 742 159 A1**

(12) **EUROPEAN PATENT APPLICATION**

(43) Date of publication:
**13.05.2026 Bulletin 2026/20**

(21) Application number: **25215182.4**

(22) Date of filing: **12.11.2025**

(51) International Patent Classification (IPC):
**G06T 7/80** (2017.01)

(52) Cooperative Patent Classification (CPC):
**G06T 7/85;** G06T 2207/10021; G06T 2207/30224

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 SE 2451132**

(71) Applicant: **Topgolf Sweden AB
182 33 Danderyd (SE)**

(72) Inventors:
• **HUGMARK, Joakim
187 76 Täby (SE)**
• **GÖTBERG, Per Thomas Olof
22145 Hamburg (DE)**

(74) Representative: **Noréns Patentbyrå AB
Box 10198
100 55 Stockholm (SE)**

(54) **METHOD AND COMPUTING APPARATUS FOR DETERMINING ADJUSTED CALIBRATION INFORMATION**

(57)     A method and a computing apparatus (110) for determining adjusted calibration information for a system (100) are disclosed. The computing apparatus (110) obtains (A110) preliminary calibration information for the system (100), wherein the preliminary calibration information indicates a preliminary three-dimensional rotation for the first image sensor (121) and the second image sensor (122) of the system (100), and obtains (A120) a plurality of point pairs, each point pair representing a respective observation of a detected object (130) projected onto a respective two-dimensional image plane of each of the first image sensor (121) and the second image sensor (122). The computing apparatus (110) determines (A130) the adjusted calibration information for the system (100) by solving (A140) an optimization problem whose objective function is dependent on the adjusted calibration information, the objective function being formulated in terms of a reprojection error and a difference measure between triangulated distances and known distances.

Fig. 2

**Description**

TECHNICAL FIELD

The embodiments herein relate to calibration of two cameras, having at least partially overlapping fields of view. In particular, a method and computing apparatus for determining adjusted calibration information are disclosed. A corresponding computer program and a carrier therefor as well as a related system are also disclosed.

BACKGROUND

When tracking sports projectiles, such as golf balls, one or more tracking sensors can be used to capture the sports projectile's trajectory as the sports projectile moves. The tracking sensors can be video cameras, radar sensors, high-speed still imaging devices, or the like.

In a scenario with two tracking sensors, a calibration between said two tracking sensors can be used to triangulate points observed by the two tracking sensors. As an example, at a driving range, a distance to an observed golf ball can be estimated using data maps from the two tracking sensors and the calibration. However, a problem can be related to achieve and maintain an accurate calibration between the two tracking sensors.

SUMMARY

An object may be to overcome, or at least reduce, one or more of the abovementioned problems and/or disadvantages.

This, and other objects, may be achieved by the solutions set forth in the appended independent claims.

According to an aspect, the object is achieved by a method, performed by a computing apparatus, for determining adjusted calibration information for a system. The system comprises the computing apparatus, a first image sensor and a second image sensor. Each image sensor of the first image sensor and the second image sensor is configured to capture respective two-dimensional information representing a detected object travelling through a three-dimensional space within a respective field of view of said each image sensor. The adjusted calibration information indicates an adjusted three-dimensional rotation of each of the first image sensor and the second image sensor in relation to a fixed coordinate system related to the three-dimensional space. At least one calibration object is located within the respective field of view of the first image sensor and within the respective field of view of the second image sensor.

The computing apparatus obtains preliminary calibration information for the system. The preliminary calibration information indicates a preliminary three-dimensional rotation for the first image sensor and the second image sensor in relation to the fixed coordinate system.

The computing apparatus obtains a plurality of point pairs. Each point pair of the plurality of point pairs represents a respective observation of the detected object projected onto a respective two-dimensional image plane of each of the first image sensor and the second image sensor.

The computing apparatus determines the adjusted calibration information for the system by solving an optimization problem having an objective function that is dependent on the adjusted calibration information. The objective function is formulated in terms of a reprojection error with respect to the plurality of point pairs. The objective function further is formulated in terms of a difference measure, expressed in the fixed coordinate system, between triangulated distances and known distances. The triangulated distances span between each of the first image sensor and the second image sensor and each of said at least one calibration object, and wherein the known distances span between each of the first image sensor and the second image sensor and each of said at least one calibration object.

As a result of the method, aka the calibration procedure herein, rotation of the two tracking sensors, e.g., located in the three-dimensional space, such as a golf range, can be determined with respect to the fixed coordinate system.

Since the objective function further can be formulated in terms of the difference measure, e.g., according to some examples a dimensionless relative measure, the method can according to some examples normalize the distances. In this manner, a scale of the distances can be compensated for.

In some embodiments, the difference measure is a dimensionless, relative measure between the triangulated distances and the known distances.

In some embodiments, the reprojection error is measured in units, such as pixels, of the image plane.

In some embodiments, an initial estimate for the optimization problem is based on the preliminary calibration information.

In some embodiments, the solving of the optimization problem comprises iteratively performing a set of actions including

triangulating an updated 3D position of said each point pair using the first and second image sensors and the adjusted calibration information,
determining an updated reprojection error for the detected object corresponding to said each point pair, and
optimizing the objective function to obtain the adjusted calibration information.

In some embodiments, the adjusted calibration information comprises an updated value for a relative three-dimensional rotation of the second image sensor in relation to the first image sensor, and wherein the method comprises

determining an updated value for a three-dimensional rotation of the first image sensor in the fixed coordinate system by

solving an equation system defined by relating a known three-dimensional position of the first image sensor in the fixed coordinate system to a known three-dimensional position of the second image sensor in the fixed coordinate system and to the updated value for the relative three-dimensional rotation of the second image sensor in relation to the first image sensor, and

adjusting a measure of a rotation of the first image sensor about a first axis based on a difference between a known position in the fixed coordinate system of said at least one calibration object and a triangulated position of the calibration object. The triangulated position is determined using the first and second image sensors, e.g., the locations thereof.

In some embodiments, the first image sensor and the second image sensor are arranged at a horizontal distance from each other, and wherein the adjusting of the measure of the rotation of the first image sensor is an adjustment of a measure of a tilt of the first image sensor.

In some embodiments, the optimizing of the objective function comprises minimizing the objective function to obtain the adjusted calibration information.

In some embodiments, the objective function is a loss function.

In some embodiments, the preliminary calibration information comprises a preliminary measure of the preliminary three-dimensional rotation of each of the first and second image sensors in relation to the fixed coordinate system, and wherein the method comprises

determining the preliminary measure of the three-dimensional rotation of each of the first and second image sensors by performing the steps

determining respective coordinates in the respective two-dimensional image plane of each of the first and second image sensors for each of said at least one calibration object,

solving an equation system defined by relating the respective coordinates to a rotational and translational three-dimensional transformation of the second image sensor in relation to the first image sensor to obtain a value for a relative three-dimensional rotation of the second image sensor in relation to the first image sensor,

obtaining a value for a three-dimensional rotation of the first image sensor in the fixed coordinate system by solving an equation system defined by relating a known three-dimensional position of the first image sensor in the fixed coordinate system to a known three-dimensional position of the second image sensor in the fixed coordinate system and to the updated value for the relative three-dimensional rotation of the second image sensor in relation to the first image sensor, and

adjusting a measure of a rotation of the first image sensor about a first axis based on a difference between a known position in the fixed coordinate system of a calibration object and a triangulated position of the calibration object, the triangulated position being determined using the first and second image sensors.

In some embodiments, the computing apparatus determines, e.g., initially and/or in the fixed coordinate system, a three-dimensional location of the first image sensor and a three-dimensional location of the second image sensor.

In some embodiments, the determining of the three-dimensional location of the first and second image sensors is performed using an electronic distance measurement device, such as an electronic transit theodolite device integrated with electronic distance measurement electronics, a total station, or the like.

In some embodiments, the adjusted calibration information comprises

an updated value for the three-dimensional location in the fixed coordinate system of the first image sensor by relating a point on the first image sensor, the three-dimensional location in the fixed coordinate system of which is known, to an optical center of the first image sensor using an updated estimate regarding a three-dimensional rotation in the fixed coordinate system of the first image sensor, and/or

an updated value for the three-dimensional location in the fixed coordinate system of the second image sensor by relating a point on the second image sensor, the three-dimensional location in the fixed coordinate system of which is known, to an optical center of the second image sensor using an updated estimate regarding a three-dimensional rotation in the fixed coordinate system of the second image sensor.

In some embodiments, the computing apparatus detects a change in rotation of the first and/or second image sensor, referred to as "present image sensor", between a first captured image of the present image sensor and a second captured image of the present image sensor, the second captured image being captured after the first captured image. The computing apparatus can determine, using manual input or an automatic image correlation procedure and expressed in units of the image plane of the present image sensor, an offset between the first and second captured images.

The computing apparatus can translate the offset into a corresponding rotation of the present image sensor.

The computing apparatus can update the adjusted calibration information based on the corresponding rotation.

In some embodiments, the preliminary calibration information comprises a preliminary measure of the three-dimensional rotation of each of the first and second image sensors in relation to the fixed coordinate system. The computing apparatus can determine the preliminary measure of the three-dimensional rotation of each of the first and second image sensors by

determining an expected location, in the image plane, of said at least one calibration object with a known position in the fixed coordinate system. At least one of the first and second image sensors has a known position in the fixed coordinate system.

determining, using manual input or an automatic image correlation procedure and expressed in units of the image plane, an offset of said at least one calibration object based on an image captured by the present image sensor and the expected location.

translating the offset into a corresponding rotation of the present image sensor, and

determining the preliminary measure of the three-dimensional rotation of the present image sensor based on the corresponding rotation.

In some embodiments, the computing apparatus determines an expected location, in the image plane, of at least one calibration object with a known position in the fixed coordinate system, using a known position in the fixed coordinate system of the present image sensor. The computing apparatus can detect, using manual input or an automatic image correlation procedure and expressed in units of the image plane, an offset of said at least one calibration object based on an image captured by the present image sensor and the corresponding expected location. The computing apparatus can triangulate, using the offset, an updated 3D position in the fixed coordinate system of said at least one calibration object. The computing apparatus can determine the adjusted calibration information based on the triangulated 3D position in the fixed coordinate system of said at least one calibration object instead of a known 3D position in the fixed coordinate system of said at least one calibration object.

According to another aspect, the object is achieved by a computing apparatus configured for determining adjusted calibration information for a system. The system comprises the computing apparatus, a first image sensor and a second image sensor. Each image sensor of the first image sensor and the second image sensor is configured to capture respective two-dimensional information representing a detected object travelling through a three-dimensional space within a respective field of view of said each image sensor. The adjusted calibration information indicates an adjusted three-dimensional rotation of each of the first image sensor and the second image sensor in relation to a fixed coordinate system related to the three-dimensional space. At least one calibration object is located within the respective field of view of the first image sensor and within the respective field of view of the second image sensor.

The computing apparatus is configured for obtaining preliminary calibration information for the system. The preliminary calibration information indicates a preliminary three-dimensional rotation for the first image sensor and the second image sensor in relation to the fixed coordinate system. The computing apparatus is configured for obtaining a plurality of point pairs. Each point pair of the plurality of point pairs represents a respective observation of the detected object projected onto a respective two-dimensional image plane of each of the first image sensor and the second image sensor.

Furthermore, the computing apparatus is configured for determining the adjusted calibration information for the system by solving an optimization problem having an objective function that is dependent on the adjusted calibration information. The objective function is formulated in terms of a reprojection error with respect to the plurality of point pairs. The objective function further is formulated in terms of a difference measure, expressed in the fixed coordinate system, between triangulated distances and known distances. The triangulated distances span between each of the first image sensor and the second image sensor and each of said at least one calibration object, and wherein the known distances span between each of the first image sensor and the second image sensor and each of said at least one calibration object.

In some embodiments, the difference measure is a dimensionless, relative measure between the triangulated distances and the known distances.

In some embodiments, the reprojection error is measured in units, such as pixels, of the image plane.

In some embodiments, an initial estimate for the optimization problem is based on the preliminary calibration information.

In some embodiments, the computing apparatus is configured for solving the optimization problem by iteratively performing a set of actions including

triangulating an updated 3D position of said each point pair using the first and second image sensors and the adjusted calibration information,
determining an updated reprojection error for the detected object corresponding to said each point pair, and
optimizing the objective function to obtain the adjusted calibration information.

In some embodiments, the adjusted calibration information comprises an updated value for a relative three-dimensional rotation of the second image sensor in relation to the first image sensor, and wherein the computing apparatus is configured for determining an updated value for a three-dimensional rotation of the first image sensor in the fixed coordinate system by solving an equation system defined by relating a known three-dimensional position of the first image sensor in the fixed coordinate system to a known three-dimensional position of the second image sensor in the fixed coordinate system and to the updated value for the relative three-dimensional rotation of the second image sensor in relation to the first image sensor, and adjusting a measure of a rotation of the first image sensor about a first axis based on a difference between a known position in the fixed coordinate system of said at least one calibration object and a triangulated position of the calibration object. The triangulated position is determined using the first and second image sensors, e.g., the locations thereof.

In some embodiments, the first image sensor and the second image sensor are arranged at a horizontal distance from each other, and wherein the computing apparatus is configured for adjusting the measure of the rotation of the first image sensor by adjusting a measure of a tilt of the first image sensor.

In some embodiments, the computing apparatus is configured for optimizing the objective function by minimizing the objective function to obtain the adjusted calibration information.

In some embodiments, the objective function is a loss function.

In some embodiments, the preliminary calibration information comprises a preliminary measure of the preliminary three-dimensional rotation of each of the first and second image sensors in relation to the fixed coordinate system, and wherein the computing apparatus is configured for determining the preliminary measure of the three-dimensional rotation of each of the first and second image sensors by performing the steps

determining respective coordinates in the respective two-dimensional image plane of each of the first and second image sensors for each of said at least one calibration object,
solving an equation system defined by relating the respective coordinates to a rotational and translational three-dimensional transformation of the second image sensor in relation to the first image sensor to obtain a value for a relative three-dimensional rotation of the second image sensor in relation to the first image sensor, and
obtaining a value for a three-dimensional rotation of the first image sensor in the fixed coordinate system by solving an equation system defined by relating a known three-dimensional position of the first image sensor in the fixed coordinate system to a known three-dimensional position of the second image sensor in the fixed coordinate system and to the updated value for the relative three-dimensional rotation of the second image sensor in relation to the first image sensor, and adjusting a measure of a rotation of the first image sensor about a first axis based on a difference between a known position in the fixed coordinate system of a calibration object and a triangulated position of the calibration object, the triangulated position being determined using the first and second image sensors.

In some embodiments, the computing apparatus is configured for determining, e.g., initially and/or in the fixed coordinate system, a three-dimensional location of the first image sensor and a three-dimensional location of the second image sensor.

In some embodiments, the computing apparatus is configured for determining the three-dimensional location of the first and second image sensors by use of an electronic distance measurement device, such as an electronic transit theodolite device integrated with electronic distance measurement electronics, a total station, or the like.

In some embodiments, the adjusted calibration information comprises

an updated value for the three-dimensional location in the fixed coordinate system of the first image sensor by relating a point on the first image sensor, the three-dimensional location in the fixed coordinate system of which is known, to an optical center of the first image sensor using an updated estimate regarding a three-dimensional rotation in the fixed coordinate system of the first image sensor, and/or
an updated value for the three-dimensional location in the fixed coordinate system of the second image sensor by relating a point on the second image sensor, the three-dimensional location in the fixed coordinate system of which is known, to an optical center of the second image sensor using an updated estimate regarding a three-dimensional rotation in the fixed coordinate system of the second image sensor.

In some embodiments, the computing apparatus is configured for

detecting a change in rotation of the first and/or second image sensor, referred to as "present image sensor", between a first captured image of the present image sensor and a second captured image of the present image sensor, the second captured image being captured after the first captured image,
determining, using manual input or an automatic image correlation procedure and expressed in units of the image plane of the present image sensor, an offset between the first and second captured images,
translating the offset into a corresponding rotation of the present image sensor, and
updating the adjusted calibration information based on the corresponding rotation.

In some embodiments, the preliminary calibration information comprises a preliminary measure of the three-dimensional rotation of each of the first and second image sensors in relation to the fixed coordinate system, and wherein the computing apparatus is configured for determining the preliminary measure of the three-dimensional rotation of each of the first and second image sensors by

determining an expected location, in the image plane, of said at least one calibration object with a known position in the fixed coordinate system. At least one of the first and second image sensors has a known position in the fixed coordinate system,
determining, using manual input or an automatic image correlation procedure and expressed in units of the image plane, an offset of said at least one calibration object based on an image captured by the present image sensor and the expected location,
translating the offset into a corresponding rotation of the present image sensor, and
determining the preliminary measure of the three-dimensional rotation of the present image sensor based on the corresponding rotation.

In some embodiments, the computing apparatus is configured for determining an expected location, in the image plane, of at least one calibration object with a known position in the fixed coordinate system, using a known position in the fixed coordinate system of the present image sensor. The computing apparatus can be configured for detecting, using manual input or an automatic image correlation procedure and expressed in units of the image plane, an offset of said at least one calibration object based on an image captured by the present image sensor and the corresponding expected location. The computing apparatus can be configured for triangulating, using the offset, an updated 3D position in the fixed coordinate system of said at least one calibration object. The computing apparatus can be configured for determining the adjusted calibration information based on the triangulated 3D position in the fixed coordinate system of said at least one calibration object instead of a known 3D position in the fixed coordinate system of said at least one calibration object.
According to further aspects, the object is achieved by a computer program and a computer program carrier corresponding to the aspects above.

BRIEF DESCRIPTION OF THE DRAWINGS

In the following, at least some embodiments will be described in detail, with reference to exemplifying embodiments and to the enclosed drawings.

Figure 1 is an overview of a system in which at least some embodiments herein may be implemented, according to some embodiments.
Figure 2 is a top view of an environment, such as a golf range, in which the system of Figure 1 can be located.
Figure 3 is a view along the z-axis direction of Figure 1, illustrating an example of tracking data captured by a first tracking sensor.
Figure 4 is another view along the z-axis direction of Figure 1, illustrating an example of tracking data captured by a second tracking sensor.
Figure 5 is a further view along the z-axis direction of Figure 1, illustrating movement of identified objects in response to pan operation of a tracking sensor.
Figure 6 is a flowchart illustrating examples of the method herein.
Figure 7 is a block diagram illustrating examples of the computing apparatus.

DETAILED DESCRIPTION

In the following description, the same, or similar, reference numerals have been used to denote the same, or similar, features, examples, items, elements or the like, when applicable.

As used herein, the expression "coordinate system of an image sensor" may refer to that the image sensor's field of view is associated with, such as aligned with, corresponding to, or the like, a coordinate system, such as in three dimensions (3D). For example, the coordinate system may describe a position of the image sensor and/or a rotation of the image sensor along three spatial dimensions, x (width), y (height) and z (length/depth).

As used herein, terms "sports projectile", "detected object" or "tracked object" may be used interchangeably, and may refer to a golf ball, a table tennis ball, a football, a soccer ball, a tennis ball, a badminton ball, a puck, a curling stone, a bandy ball, a dart arrow, or the like.

As used herein, the term "image sensor" can refer to a camera, a video camera, a high-speed imaging device, a radar detector, a video recorder, or the like.

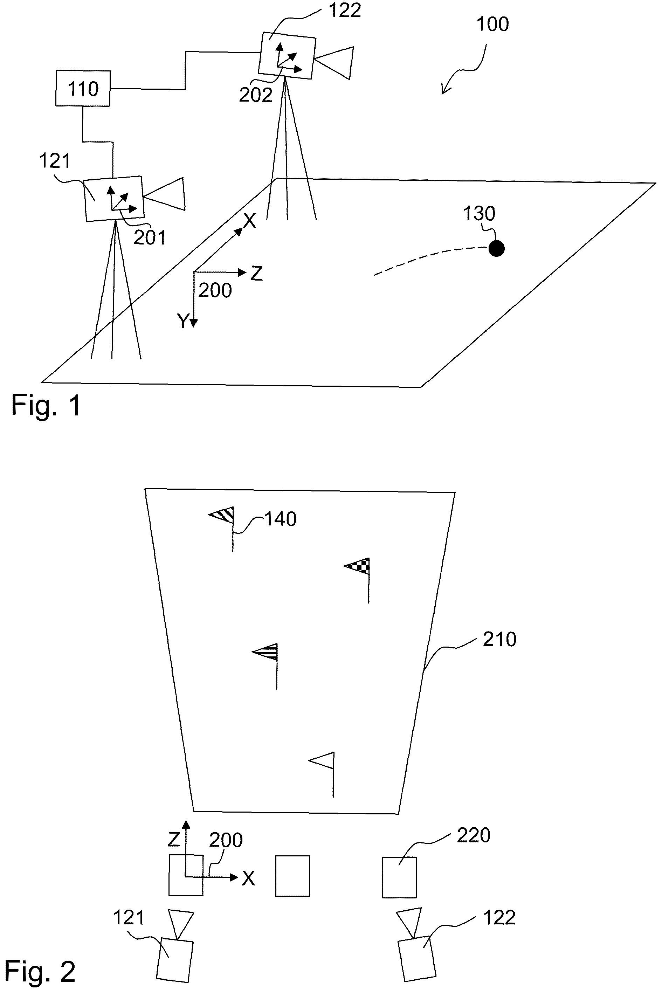

Figure 1 illustrates a system 100 in which the embodiments described herein can be implemented. The system 100 can be configured for determining adjusted calibration information to be used by the system 100 for the purpose of maintaining accurate tracking of sports projectiles, such as golf balls, or the like.

The system 100 comprises a computing apparatus 110, such as computer, a PC, a laptop, a stationary computer, a mini-PC, a single board computer, a processor on a microcontroller platform, or the like.

The system 100 further comprises a first image sensor 121 and a second image sensor 122. Each image sensor 121/122 of the first image sensor 121 and the second image sensor 122 is configured to capture respective two-dimensional information representing a detected object 130, such as a golf ball, or the like, travelling through a three-dimensional space within a respective field of view of said each image sensor, wherein the adjusted calibration information indicates an adjusted three-dimensional rotation of each of the first image sensor 121 and the second image sensor 122 in relation to a fixed coordinate system 200 related to the three-dimensional space, aka a reference coordinate system, a global coordinate system, a 3D space coordinate system, or the like. This means that the fixed coordinate system 200 is fixed with respect to the three-dimensional space. The three-dimensional space can be a range, a range field, an indoor driving range facility, an outdoor driving range, a practice area for hitting golf balls, or the like.

At least one calibration object 140 is located within the respective field of view of the first image sensor 121 and within the respective field of view of the second image sensor 122. The term "calibration object" can refer to a target, a marker, a flag, a pattern on a sign, an identifiable object, or the like, that is located in the three-dimensional space, e.g., being visible in both respective fields of view of the first and second image sensor 121, 122 as already mentioned.

Figure 2 is a top view of the three-dimensional space, such as a range field 210, in which at least one calibration object 140 is located. A number of bays 220 are located along one side of the range field 210. In each bay 220, a golf player (not shown) can practice hitting golf balls and the system 100 herein can track the golf balls and display a trace of the golf balls that are hit in order to provide feedback to the golf player, e.g., on a screen in viewable by the golf player when standing in the bay.

As an example, the fixed coordinate system, such as a range coordinate system, can be defined by that:

- an origin of the fixed coordinate system is placed in a center of a specific bay 220, e.g., usually the left-most bay when facing a hitting direction (i.e., in a direction of the z-axis), and on a lowest level (bottom floor), in case there are several levels of bays, such as in a multistory building,
- an x-axis points to the right, towards another specific bay (usually the right-most bay on the bottom floor),
- a y-axis points down, along the axis of gravity (see Figure 1).
- a z-axis points out on the range, along the hitting direction (see Figure 1 or Figure 2).

However, at least according to some examples, the adjusted calibration information can include information about rotations of the image sensors 121, 122, e.g., relatively each other and/or in terms of the fixed coordinate system 200, e.g., expressed as absolute values, e.g., angles, or angles of vectors.

Furthermore, the rotations of the image sensors 121, 122, e.g., the 3D rotation thereof, can be expressed in various manners, such as by means of a rotation matrix, a quaternion, a triplet of Euler angles (classic Euler angles), or the like.

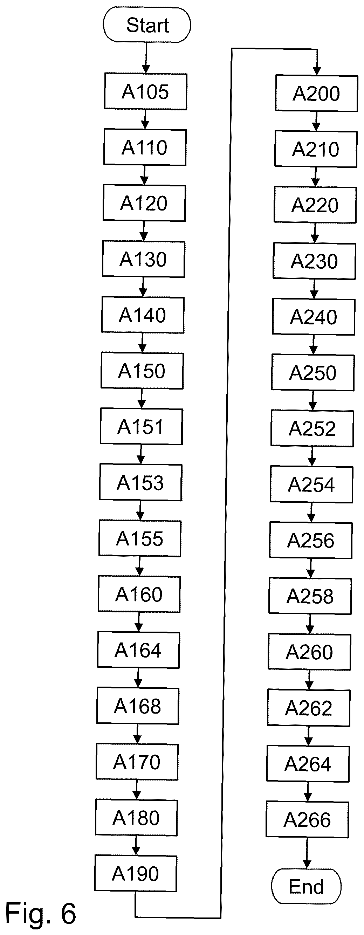

Figure 6 shows a schematic flowchart, illustrating an exemplifying method according to the embodiments herein. Thus, the computing apparatus 110 or the system 110 can perform a computer-implemented method for determining adjusted calibration information to be used by the system 100 for the purpose of maintaining accurate tracking of sports projectiles.

The adjusted calibration information can represent a coordinate transformation between a first coordinate system 201 (Fig. 1) of the first image sensor 121 and a second coordinate system 202 (Fig. 1) of the second image sensor 122, e.g., a coordinate transformation from the first coordinate system of the first image sensor 121 to the second coordinate system of the second image sensor 122, or vice versa.

One or more of the following actions may be performed, e.g., in any suitable order. Typically, as an example, a second action that processes a result, or an outcome, of a first action may preferably be performed after the first action, since otherwise the result may not be available for processing by the second action.

Action A105

The computing apparatus 110 can, e.g., initially, determine, e.g., in the fixed coordinate system 200, a three-dimensional location of the first image sensor 121, e.g., referred to as a first 3D location, and a three-dimensional location of the second image sensor 122, e.g., referred to as a second 3D location.

In some embodiments, the determining A105 of the three-dimensional location of the first and second image sensors 121, 122 can be performed using an electronic distance measurement device, such as an electronic transit theodolite device integrated with electronic distance measurement electronics, a total station, or the like.

In more detail, this action can result that the first and second 3D locations becomes known to the system 100 and/or the computing apparatus 110, e.g., by measurement using the total station.

The locations of the image sensors 121, 122 can be defined as the respective location of the respective image sensors' 121, 122 optical center(s), which may be at an offset compared to a point given by measurements obtained by the total station, or the like. If the point given by measurement is known, then the offset vector from that position to the optical center of the image sensor 121/122 can be determined if the rotation of the image sensor(s) 121, 122 is/are also known.

Sometimes, the offset, or offsets since there can be a respective offset for each of the three dimensions, is assumed to be zero and thus not compensated for. In some examples, an iterative approach can be applied to determine the offset(s). Then the offset(s) can be set to an initial value, or values, e.g., using a guess, a random value, or even zero(s). The calibration can then be performed with the initial value. Next, the offset can be calculated using the 3D rotations of the calibration. Subsequently, the calibration can be performed again. These steps can be performed iteratively, e.g., until a convergence condition is fulfilled, e.g., estimated error is below a threshold, change from one iteration to another is less than a threshold value, or the like.

Action A110

The computing apparatus 110 can obtain, such as determine, or the like, preliminary calibration information for the system 100. The preliminary calibration information indicates a preliminary three-dimensional rotation of each of the first image sensor 121 and the second image sensor 122 in relation to the fixed coordinate system 200.

The preliminary calibration information is used as a starting point, or initial guess, in action A130 and A140, in which an optimization problem is set up and formulated and then also solved using a known algorithm for solving of optimization problems, such as gradient descent, linear programming, Newton-Raphson method, conjugate gradient method, simulated annealing, dynamic programming, Lagrange multipliers, branch and bound, or known approaches to solving multivariate non-linear optimization functions.

Sometimes, the preliminary calibration information can be set to zero rotation, e.g., in 3D, while assuming that no rotation is present, as an initial guess.

In some examples, the preliminary calibration information can be obtained by being determined as described in section "Further examples relating to action A110" below.

Action A120

The computing apparatus 110 can obtain a plurality of point pairs, wherein each point pair represents a respective projection observation of the detected object 130 onto a respective two-dimensional image plane of each of the first image sensor 121 and the second image sensor 122. These point pairs are used in action A140 to formulate an objective function being part of an optimization problem that is to be set up. As an example, the computing apparatus 110 can obtain the plurality of point pairs by extracting the plurality of point pairs from traces provided by a tracking procedure executed for a respective set of images captured by the respective image sensor, e.g., the first and/or the second image sensor 121, 122.

In more detail, in some examples, the preliminary calibration information can be used by a tracking procedure, in order to collect the plurality of point pairs, as follows. The tracking procedure can be applied for images from the first image sensor 121 and for images from second image sensor 122. In this manner, a first trace, associated with the images from the first image sensor 121, and a second trace, associated with the images from the second image sensor 122, can be obtained. The first and second tracks can then be matched to obtain the plurality of point pairs, where each pair includes one point from the first track that corresponds to, e.g., associated with the same or similar point in time, one point from the second track.

Furthermore, in some examples, the computing apparatus 110 can extract hundreds of point pairs from the traces obtained when running the tracking procedure with the initial calibration, aka the preliminary calibration information, as described above. A point pair is obtained by observing the same golf shot in both the first image sensor 121 and the second image sensor 122, which capture their respective images of the same golf shot. Optionally, the computing apparatus can sometimes compensate the respective images from the first and second image sensor 121, 122 for any time difference between the images, e.g., by use of interpolation, e.g., linear or non-linear, or the like. In this manner, the respective images from the first and second image sensors 121, 122 can be aligned in time.

Additionally, in some examples, the computing apparatus 110 can select the plurality of point pairs, e.g., taken from a superset of point pairs. The plurality of point pairs can then include only the point pairs of the superset for which a quality value is acceptable, e.g., below a threshold for sufficient quality. This can mean that the quality value, such as a correspondence or matching quality value, or the like, can be calculated for each point pair, and this value can be compared against a threshold in order to keep only points deemed good enough, i.e. satisfying the threshold. The quality value can be calculated as a reprojection error. The threshold can then be a threshold relating to allowed, or maximum, reprojection error. Furthermore, as an example, the reprojection error is calculated by triangulating a 3D point from the point-pair of 2D points, and then re-project this 3D point back onto the 2D images. Then the 2D position of the reprojected point is compared with each of the original 2D points in the point pairs. The full reprojection error can then be either the sum of those two errors, the average of them, the maximum of the two, or the like.

Action A130

The computing apparatus 110 can determine the adjusted calibration information for the system 100 by solving an optimization problem that is dependent on the adjusted calibration information, e.g., as explained in more detail in the following.

Action A140

The computing apparatus 110 can solve the optimization problem with an objective function formulated in terms of a reprojection error with respect to the plurality of point pairs.

The objective function is formulated in terms of a reprojection error with respect to the plurality of point pairs, wherein the objective function further is formulated in terms of a difference measure, expressed in the fixed coordinate system 200, between triangulated distances and known distances, wherein the triangulated distances span between each of the first image sensor 121 and the second image sensor 122 and each of said at least one calibration object 140, and wherein the known distances span between each of the first image sensor 121 and the second image sensor 122 and each of said at least one calibration object 140. As an example, the known distances can be measured by using a total station, e.g., in connection with mounting of the first and second image sensors 121, 122. The position of each calibration object 140 is measured, from which the distance between any targets can be computed. Furthermore, the known distances can be provided to the computing apparatus 110, e.g., received by it, e.g., from an external or internal memory or the like.

Even if some of the following statements have been mentioned above, it may be noted that the optimization problem can be defined by that:

- the preliminary calibration information, or the initial calibration, is used as a start guess,

- each point pair can be triangulated using current calibration information, e.g., a current best guess of the calibration information. During iterations, the current best guess of the calibration information converges toward the adjusted calibration information. Furthermore, for said each point pair, the computing apparatus 110 can compute a 3D position of said each point pair and a reprojection error of said each point pair. Various triangulation methods can be used, such as Singular Value Decomposition, Hartley & Sturm's polynomial methods, optimal correction, or the like. A set of resulting 3D positions and reprojection errors can thus be calculated by the computing apparatus 110. The set of resulting 3D positions and reprojection errors can also be stored, e.g., in a memory of the computing apparatus 110.

- an objective function, such as a loss function, or the like, for the optimizer to operate with is expressed. The objective function can evaluate the current calibration information based on the corresponding and triangulated points, e.g., reprojection errors thereof and the difference measure mentioned above. The corresponding points can be extracted from the image(s) as observations, e.g., either by the tracking algorithm or by a human indicating where the calibration object(s) 140 is located.

- The optimization problem can be solved using gradient descent, or a similar optimization method. When the optimization problem is solved, the adjusted calibration information has been determined, e.g., a new 3D rotation of the second image sensor 122 relative to the first image sensor 121 is established.

- To determine the rotation of the first image sensor 121 relative to the fixed coordinate system 200, e.g., the range coordinate system or the like, the same method as for the initial calibration is used, i.e., in the same or similar manner as the preliminary calibration information is obtained in action A110. As explained below in section "Further examples of relating to action A110", initially two rotation angles are determined and thereafter a third angle, e.g., the tilt angle, is determined.

Further description and explanation relating to the objective function is found below in section "The objective function".

In view of the above, it can be, at least according to some examples, that the computing apparatus 110 iteratively determines the adjusted calibration information under, such as subject to, or the like, a first constraint that the reprojection error with respect to the plurality of point pairs, and the difference measure, expressed in the fixed coordinate system 200, between triangulated distances and known distances satisfies, such as meets, or the like, a condition for allowed reprojection error and difference measure. As an example, a joint value for the reprojection error and the difference measure can be calculated as a weighted sum of the reprojection error and the difference measure. The joint value can then be compared to the condition for allowed reprojection error and difference measure. Weights for the reprojection error and the difference measure can determine an extent of influence on the joint value that the reprojection error and the difference measure can have.

Thus, again expressed somewhat differently, the computing apparatus 110 can iteratively determine the adjusted calibration information by solving an equation system dependent on the reprojection error and the difference measure, while satisfying the constraint, thereby obtaining the adjusted calibration information.

Action A150

The computing apparatus 110 can iteratively perform a set of actions for solving the optimization problem.

The set of actions includes actions A151, A153, and A155 below.

Action A151

The computing apparatus 110 can triangulate an updated 3D position of each point pair using the first and second image sensors 121, 122 and the adjusted calibration information, or current calibration information.

Action A153

The computing apparatus 110 can determine an updated reprojection error for the detected object corresponding to each point pair.

Action A155

The computing apparatus 110 can optimize the objective function to obtain the adjusted calibration information. The action A155 of optimizing the objective function can comprise minimizing the objective function to obtain the adjusted calibration information.

Action A160

In some embodiments, the adjusted calibration information can comprise an updated value for a relative three-dimensional rotation of the second image sensor 122 in relation to the first image sensor 121.

The computing apparatus 110 can determine an updated value for the three-dimensional rotation of the first image sensor 121 in the fixed coordinate system 200.

Action A164

The computing apparatus 110 can solve an equation system defined by relating a known three-dimensional position of the first image sensor to a known three-dimensional position of the second image sensor and to the updated value for the relative three-dimensional rotation of the second image sensor 122.

Action A168

The computing apparatus 110 can adjust a measure of the rotation of the first image sensor 121 about a first axis based on a difference between a known position in the fixed coordinate system 200 of said at least one calibration object 140 and a triangulated position of the calibration object 140, wherein the triangulated position is determined using the first and second image sensors 121, 122, e.g., the locations thereof.

Action A170

The computing apparatus 110 can determine a preliminary measure of the three-dimensional rotation of the first and second image sensors 121, 122 by performing actions A180, A190 and A200 below.

Action A180

The computing apparatus 110 can determine respective coordinates in the two-dimensional image plane of each of the first and second image sensors for each calibration object.

Action A190

The computing apparatus 110 can solve an equation system to obtain a value for the relative three-dimensional rotation of the second image sensor in relation to the first image sensor.

Action A200

The computing apparatus 110 can obtain a value for the three-dimensional rotation of the first image sensor in the fixed coordinate system by solving an equation system defined by relating a known three-dimensional position of the first image sensor in the fixed coordinate system 200 to a known three-dimensional position of the second image sensor in the fixed coordinate system 200 and to the updated value for the relative three-dimensional rotation of the second image sensor in relation to the first image sensor; and adjusting a measure of a rotation of the first image sensor about a first axis based on a difference between a known position in the fixed coordinate system 200 of a calibration object and a triangulated position of the calibration object, the triangulated position being determined using the first and second image sensors 121, 122.

Action A210

After some time, the first and/or second image sensor 121/122 may move slightly, e.g., due to external forces, elasticity in a respective mount of the first/second image sensor 121/122. The orientation and/or the position of the image sensors 1217122 can thus change slightly.

Notably, a slight positional change does not affect accuracy of the calibration/tracking much, since a positional change will be much smaller than a baseline between the first and second image sensors 121, 122, e.g., millimeters as compared to dozens of meters. However, a slight rotational change might have a larger impact on the calibration. E.g., a change of just 0.1 degrees can result in a degradation of the tracking. It is therefore beneficial to be able to adjust the calibration information easily and quickly for in response to changes in the rotation of either one or both of the first and second image sensors 121, 122.

Accordingly, the computing apparatus 110 can detect a change in rotation of the first and/or second image sensor 122, referred to as "present image sensor 121/122", between a first captured image of the present image sensor 121/122 and a second captured image of the present image sensor 121/122, the second captured image being captured after the first captured image.

In this manner, the system 100 and/or the computing apparatus 110 is capable of obtaining, such as grabbing, or the like, recent images from the first/second image sensor 121, 122, and projecting the location(s) of the calibration object(s) 140, given the current or adjusted calibration information, onto the recently grabbed image(s). When the rotation of one of the image sensors 121, 122 changes, the entire image from said one of the image sensors 121, 122 will shift slightly, and the projected location of the calibration object(s) 140 will no longer align with the locations of the calibration object(s) visible in the grabbed image. This difference in alignment results in the offset in action A220 below.

Action A220

The computing apparatus 110 can determine using manual input or an automatic image correlation procedure and expressed in units of the image plane of the present image sensor 121/122, an offset between the first and second captured images.

Action A230

The computing apparatus 110 can translate the offset into a corresponding rotation of the image sensor.
Hence, in some examples, the computing apparatus 110 may then adjust the rotation of the image sensor (that moved slightly), either using a computer-vision based approach that identifies the calibration object(s) in the image and matches them with projected locations, or by providing an operator with a software that may be used to interactively change the rotation of the image sensor about three independent axes. The operator can then align the projected locations of the calibration object(s) to the locations of the calibration objects in the image.

Action A240

The computing apparatus 110 can update the adjusted calibration information based on the corresponding rotation, e.g., while using the computer-vision based approach.
In some examples, when the adjustment is complete, the updated calibration information can be saved and applied by the operator, e.g., when the operator updates the calibration.

Action A250

In some embodiments, the preliminary calibration information comprises a preliminary measure of the three-dimensional rotation of each of the first and second image sensors 121, 122 in relation to the fixed coordinate system 200.
The computing apparatus 110 can determine the preliminary measure of the three-dimensional rotation of each of the first and second image sensors 121, 122 by performing actions A252, A254, A256, and A258 below.

Action A252

The computing apparatus 110 can determine an expected location, in the image plane, of said at least one calibration object 140 with a known position in the fixed coordinate system 200, wherein at least one of the first and second image sensors 121, 122 has a known position in the fixed coordinate system 200.

Action A254

The computing apparatus 110 can determine, using manual input or an automatic image correlation procedure and expressed in units of the image plane, an offset of said at least one calibration object 140 based on an image captured by the present image sensor 121/122 and the expected location.

Action A256

The computing apparatus 110 can translate the offset into a corresponding rotation of the present image sensor 121/122.

Action A258

The computing apparatus 110 can determine the preliminary measure of the three-dimensional rotation of the present image sensor 121/122 based on the corresponding rotation.

Action A260

The computing apparatus 110 can determine an expected location, in the image plane, of at least one calibration object 140 with a known position in the fixed coordinate system 200, using a known position in the fixed coordinate system 200 of the present image sensor 121/122. Accordingly, it is assumed that the known position in the fixed coordinate system 200 of the present image sensor 121/122 is available to the computing apparatus 110.

Action A262

The computing apparatus 110 can detect, using manual input or an automatic image correlation procedure and expressed in units of the image plane, an offset of said at least one calibration object 140 based on an image captured by the present image sensor 121/122 and the corresponding expected location.

Action A264

The computing apparatus 110 can triangulate, using the offset, an updated 3D position in the fixed coordinate system 200 of said at least one calibration object 140.

Action A266

The computing apparatus 110 can determine the adjusted calibration information based on the triangulated 3D position in the fixed coordinate system 200 of said at least one calibration object 140 instead of a known 3D position in the fixed coordinate system 200 of said at least one calibration object 140.

In some embodiments, the difference measure is a dimensionless, relative measure between the triangulated distances and the known distances.

In some embodiments, the reprojection error is measured in units such as pixels of the image plane.

In some embodiments, the initial estimate for the optimization problem is based on the preliminary calibration information.

In some embodiments, the first image sensor 121 and the second image sensor 122 are arranged at a horizontal distance from each other, and the adjusting A168 of the measure of the rotation of the first image sensor is an adjustment of the tilt of the first image sensor.

In some embodiments, the objective function is a loss function.

In some embodiments, the preliminary calibration information comprises a preliminary measure of the three-dimensional rotation of each image sensor.

In some embodiments, the method further comprises determining the three-dimensional location of the first and second image sensors using an electronic distance measurement device.

In some embodiments, the updated calibration information comprises an updated value for the three-dimensional location of the image sensors in the fixed coordinate system.

In some embodiments, the adjusted calibration information comprises:

an updated value for the three-dimensional location in the fixed coordinate system 200 of the first image sensor by relating a point on the first image sensor 121, the three-dimensional location in the fixed coordinate system 200 of which is known, to an optical center of the first image sensor 121 using an updated estimate regarding a three-dimensional rotation in the fixed coordinate system 200 of the first image sensor 121, and/or

an updated value for the three-dimensional location in the fixed coordinate system 200 of the second image sensor 122 by relating a point on the second image sensor 122, the three-dimensional location in the fixed coordinate system 200 of which is known, to an optical center of the second image sensor 122 using an updated estimate regarding a three-dimensional rotation in the fixed coordinate system 200 of the second image sensor 122.

In some embodiments, the method further comprises determining an expected location of at least one calibration object and triangulating its updated 3D position.

Additionally, according to some examples, the method for determining the adjusted calibration information can also be used for the initial calibration, e.g., for obtaining the preliminary calibration information. In this case, the calibration object(s) 140 are projected onto the image as a default calibration existed, e.g., being an initial guess of each image sensor's 121, 122 rotation. With the examples herein, a suitable initial guess can be: 0 tilt, 0 roll and a pan-angle between -20 to 20 degrees.

It is also possible to use the actions for updating the adjusted calibration information as a main calibration method. In that case an adjustment calibration is first performed, e.g., actions A210 through A240, and optionally A252 through A258. Then, since imperfections in the intrinsic calibration and total station measurements will make it difficult to align all calibration objects 140 at the same time, a second step is performed, where each calibration object's projection in the image can be given an offset. This offset determines the difference between the projected position of the calibration object in the image and the visually correct position thereof in the image. This offset can either be determined by the same computer vision method that is used to find the best alignment, by a different computer vision method, or by manual inspection.

This offset will allow us to compute a corrected "triangulated position" for each calibration object, where the offset position in each image is used to triangulate a new 3D position for the calibration object. This new 3D position will be slightly different from the 3D position measured by the total station, but since it's based on observations from the same sensors that track the ball, the relative position of the ball and the target will be more precise. These triangulated positions for one or more calibration objects 140 can be used together with the actions for determining the adjusted calibration information to provide an improved accuracy.

Use of the calibration information

In some examples, the adjusted calibration information, e.g., being information specifying a stereo calibration, can be used to triangulate points observed by the first and/or second image sensors 121, 122. In this way, it's possible to calculate a 3-dimensional location of an object identified by 2-dimensional points in two or more image sensors, such as the first and second image sensor 121, 122.

In some examples, the tracking procedure can track objects in the 2-dimensional image captured by the first and/or second image sensor 121, 122. Then, 2-dimensional traces, comprising multiple, consecutive points, can be derived from the two-dimensional images. All 2-dimensional traces with time-wise overlapping points can be triangulated, where points, simultaneous in time, from the two traces can be pair-wise triangulated.

If the two sensors are not triggered synchronously, there might not be simultaneous points. In that case, compensation is performed by interpolating the 2-dimensional points linearly, or non-linearly, along their timeline to construct 2D points which are simultaneous, e.g., aligned in time.

When triangulating the simultaneous points, a reprojection error can be determined. The reprojection error is the difference between observed 2D positions, and the 2D positions of the triangulated corresponding 3-dimensional point re-projected back onto the sensors, given the current/adjusted calibration information. If the calibration information and the images obtained by the sensors is ideal, the reprojection error will be zero. In practice, the reprojection error is rather an indication of how well the calibration information corresponds to an actual geometry of the system.

Since the tracking procedures used can support tracking of multiple detected objects at the same time, 2D traces from different traces can be paired together, if they have time-wise overlapping points.

Furthermore, the 2D tracking system might generate 2D traces of other objects, such as flies, birds, seeds, etc., which might get paired with each other or with traces of golf balls. By analyzing the reprojection error for each pair-wise triangulation made between two traces, it is possible to determine whether they match and should be passed along in the tracking procedure.

As a result, an amount of data that is to be processed and filtered by the tracking procedure can be significantly reduced.

Further examples of relating to action A110

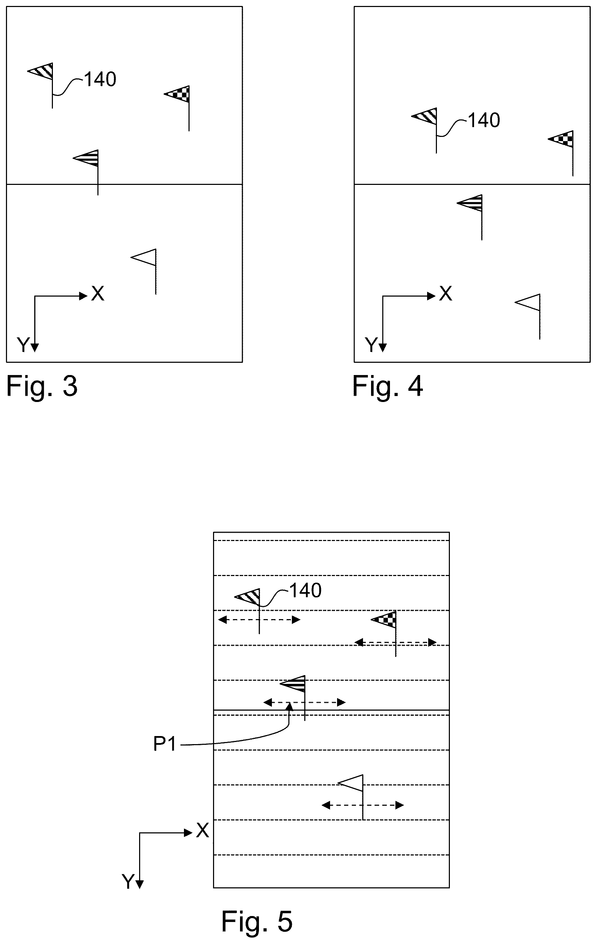

In some examples, the preliminary calibration information can be determined as follows, e.g., with reference to Figure 3 and Figure 4.

Find, in a first image from the first image sensor 121, a first plurality of points, e.g., at least four points, or the like, where each point of the first plurality of points corresponds to a respective feature identified in the first image. The respective feature can be identified by a user that selects the first plurality of points, or by a computer vision method identifying image features/patterns, such as Sparse-Warped Inverse Feature Transform (SWIFT), Histogram of Oriented Gradients (HoG), or the like.

Find, in a second image from the second image sensor 122, a second plurality of points, e.g., at least four points, or the like. The second plurality of points corresponds to the first plurality of points in that each point of the second plurality of points corresponds to the respective feature identified in the first image, i.e., that is thus also identified in the second image. Again, the respective feature can be identified by a user or using a computer vision method.

The first and second image are captured simultaneously, or almost simultaneously, whereby the first and second image are associated with one and the same time frame, or point in time.

Hence, as an example, in each of the first and second image sensors 121, 122, at least eight corresponding points can be determined. There can be four pairs of points, where one of the points of the pair indicates a feature identified in the first image and the other one of the points of the pair indicates the same feature identified in the second image. As mentioned, this can be done either by a user specifying the points manually, or by a computer vision method using image features, such as SWIFT, HoG or similar, that uses pattern-matching techniques to find the same object in different images.

From geometry computer vision, a constraint relating to epipolar geometry is known. The epipolar constraint allows estimation of 3D coordinates of a point p from its images, e.g., the first and second image mentioned above. Using the epipolar constraint, an equation system, where the rotation of the second image sensor 122 relative to the first image sensor 121 is treated as an unknown, can be expressed as:

$$(y')^\top E y = 0$$

where:

**y'** are the (normalized) coordinates of the targets in the first image sensor 121,
**y** are the (normalized) coordinates of the targets in the second image sensor 122, and
**E** is an Essential matrix, describing the relative position and orientation of the second image sensor 122 compared to the first image sensor 121.

Since the locations of the first and second image sensors 121, 122 are already known, e.g., from measurement using the total station, the equation system can be solved for the rotation of the second image sensor 122, relative to the first image sensor 121. The equation system is solved using well-known Singular Value Decomposition method, which can be used to solve over-determined equation systems in matrix form.

The rotation of the first image sensor 121, e.g., relative to the fixed coordinate system 200, is determined in the following way.

Use the measured location of the second image sensor 122, to determine two of the angles of the first image sensor 121:

$$ \boldsymbol{t}_L + \mathrm{R}_L \boldsymbol{t}_R^{rel} = \boldsymbol{t}_R $$

$\boldsymbol{t}_L$ is the position of the first image sensor 121 (known)
$\boldsymbol{t}_R$ is the position of the second image sensor 122 (known)

$\boldsymbol{t}_R^{rel}$ is the position of the second image sensor 122 in the coordinate system of the first image sensor 121
$\mathrm{R}_L$ is the rotation of the first image sensor 121

These equation systems can generally be $\mathrm{R}_L$, but not all three. The rotation of the first image sensor 121 around an axis that passes both the first and second image sensor 122, e.g., x-axis, will still be unknown. Notably, the definition of the x-axis in the coordination system referenced here passes through the first and second image sensors 121, 122.

To determine the rotation of the first image sensor 121 around the line that passes between, or through, the first and the second image sensor 122, i.e., the tilt angle of the first image sensor 121, an external reference point with a known position can be used. The external reference point can be a measured target point, such as a point on the calibration object(s) 140, a virtual point at the horizon, located at the position $(0, \boldsymbol{t}_{L,y}, 0)$, on the outfield, e.g., in the three-dimensional space, such as the range. The point's location, e.g., y coordinate, or height, is known and visible in the first and second image sensors 121, 122. Again, the line can be an x-axis as shown in Figure 1.

The measured (virtual) point(s) can then be detected and marked in the images from the first and second image sensors 121, 122. The point(s) is/are then triangulated, using the calibration with a still unknown tilt angle, i.e. the preliminary calibration information not yet being complete. That is to say, a tilt angle of the preliminary calibration information is still unknown, recalling that the abovementioned equation system can only be solved for two of the three angles. Hence, the tilt angle is assumed to be zero, which often can be close to an actual tilt angle obtained when the first and second image sensors 121, 122 are mounted, e.g., in a standardized way. Then, one or more triangulated 3D positions can be obtained from the (virtual) point(s). These 3D positions are compared to their known (measured) positions. Then, the tilt angle of the first image sensor 121 is adjusted to align with the known positions.

The initial calibration, aka the preliminary calibration information, can then be applied in a tracking procedure, and shots are tracked by the procedure. Various known tracking procedures can be used. The tracked shots can be used to determine corresponding 2D trajectories, containing corresponding 2D points. These 2D points are used when calculating the adjusted calibration information as described above.

The objective function

Sometimes, the objective function, such as the loss function, can be defined by a difference between the projection of a triangulated 3D point and the original 2D point, i.e. the reprojection error.

However, the epipolar constraint specifies that a point in one image sensor 121/122 corresponds to a line in the other image sensor 121/122 - this means that any point on that line will be triangulated with a reprojection error of zero (0) with the point in the first image sensor 121. In any system with the first image sensor 121 and the second image sensor 122, aka a two-sensor system, these lines will be roughly parallel when considering all possible points in the first image sensor 121. This means that rotating the first image sensor 121, or the second image sensor 122, around an axis perpendicular to these lines will result in the reprojection error not changing very much. In one typical image sensor setup, where the two image sensors are placed on roughly the same Y and Z coordinates, but at different X-coordinates, i.e. left and right of each other, the epipolar lines will be roughly horizontal, meaning that the unknown angle will correspond to the pan angle. See Figure 5.

Knowing this angle with high precision is beneficial when attempting to calculate a distance to a triangulated point, or any triangulated point.

The reprojection errors for the points don't change very much for pan rotation, i.e., the partial derivative between the reprojection error and the pan angle is close to zero. This makes it difficult for the solving of the optimization problem to converge. Thus, locations of calibration objects 140 on the range, aka outfield, are measured. Then, the distance between each of the first and second image sensors 121, 122 and each said at least one calibration object 140 is used as input to the optimization problem, i.e. input in the form of the difference measure.

In more detail, the epipolar constraint will cause the epipolar lines to be roughly horizontal, due to the placement of the cameras, e.g., along a horizontal line, to the left and right of each other. This in turn leads to the fact that panning a camera, aka image sensor, will cause objects in the image to move along the epipolar lines. This is the reason to that the reprojection error is constant during this panning rotation. With a constant reprojection error it is difficult to determine the pan angle specifically using an objective function that only uses the reprojection error (which then as mentioned is more or less constant) in its objective function. Thus, by including the distance ratios, also referred to as the difference measure, in the objective function, it is made possible to converge and solve the optimization problem.

Therefore, each of said at least one calibration object 140 is triangulated, e.g., using anyone or more of the abovementioned methods. Then, the reprojection error and the distance for said each of the at least one calibration object 140 to said each of the first and second image sensors 121, 122 is recorded.

Using the distance between the first and/or second image sensor 121, 122 and each of the calibration objects 140 also comes with an issue - namely the issue of scale. The epipolar constraint as well as the projection of the calibration object 140 onto the image plane of the first/second image sensor 121, 122 does not take the scale of distances into account, but only angles. This means that even if the equation system, described by the corresponding points and the epipolar constraint, is solved, the scale is still unknown. As a result, a measured distance (between each of the at least one calibration object 140 and each of the first and second image sensors 121, 122) cannot be used directly in the objective function. Thus, to alleviate, or eliminate, this issue relative distances are used instead. That is, a triangulated distance is divided with another triangulated distance and a measured distance is divided with another measured distance. Thus, a triangulated distance ratio and a measured distance ratio are obtained. Then, the triangulated distance ratio can be compared with the measured distance ratio. As a result, a dimensionless error-ratio is obtained.

As an example, the triangulated distance to a close target is 50 m and a triangulated distance to a far target is 100 m. Furthermore, the measured distance to the close target is 50 m and a measured distance to the far target is 110 m. Then, the following ratios are computed:

$$100 / 50 = 2$$

$$110 / 50 = 2.2$$

Next, the above ratios are compared, e.g.,
abs(2 - 2.2) = 0.2. In this example, the error ratio is 0.2.

Accordingly, the objective function can be formulated as:

$$E \ = \ a \times E_{dist} + b \times E_{L2} = D \times \frac{1}{n} \sum_{t \, \in \, targets} d'_{l,t}/d_{l,t} + d'_{r,t}/d_{r,t} + \frac{1}{N}\sum_{i} e_i$$

where a and b are weights that can be adjusted to emphasize the distance or reprojection error more.

d' and d are respectively the triangulated and measured distances between each calibration object 140 and each of the first and second image sensors 121, 122. Since the scale of the fixed coordinate system is unknown at this point, the relative difference between the triangulated and measured distances is used instead of the absolute difference.

D is a constant that will transform the dimensionless relative distance error to an absolute distance error with a length unit, and should be set to a value close to a typical target distance, for example 100 meter.

e is the reprojection error of each point-pair, measured in pixels (px).

In this example, each of the sums in the expression for the objective function are divided by the number of terms in the sum to get mean values. This means that if a and b are the same, a 1 px reprojection error is treated the same way as a 1 m distance error D meters away from the first and/or second image sensor 121/122.

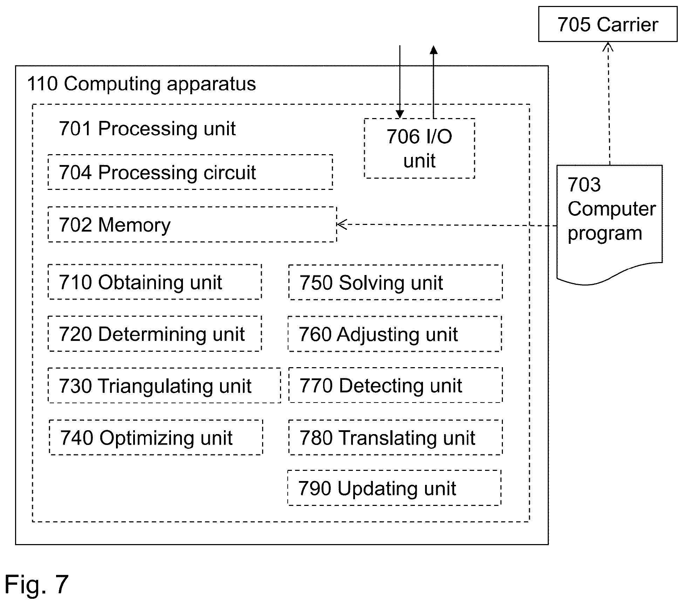

With reference to Figure 7, a schematic block diagram of embodiments of the computing apparatus 110 of Figure 1 is shown.

The computing apparatus 110 can include a processing unit 701 for performing the methods described herein. The processing unit can be embodied in the form of one or more hardware units and/or one or more software units. The term "unit" may thus refer to a circuit, a software block or the like according to various embodiments as described below.

The computing apparatus 110 may further include a memory 702. The memory can include, such as contain or store, instructions, e.g., in the form of a computer program 703, which can include computer readable code units.

According to some embodiments herein, the computing apparatus 110 and/or the processing unit 701 includes a processing circuit 704 as an exemplifying hardware unit, which can include one or more processors. Accordingly, the processing unit 701 may be embodied in the form of, or 'realized by', the processing circuit 704. The instructions may be executable by the processing circuit 704, whereby the computing apparatus 110 is operative to perform the methods of Figure 6. As another example, the instructions, when executed by the computing apparatus 110 and/or the processing circuit 704, may cause the computing apparatus 110 to perform the method according to Figure 6.

In view of the above, in one example, there is provided a computing apparatus 110 configured for determining adjusted calibration information for a system 100. As mentioned, the system 100 comprises the computing apparatus 110, a first image sensor 121 and a second image sensor 122, wherein each image sensor of the first image sensor 121 and the second image sensor 122 is configured to capture respective two-dimensional information representing a detected object 130 travelling through a three-dimensional space within a respective field of view of said each image sensor, wherein the adjusted calibration information indicates an adjusted three-dimensional rotation of each of the first image sensor 121 and the second image sensor 122 in relation to a fixed coordinate system 200 related to the three-dimensional space, wherein at least one calibration object 140 is located within the respective field of view of the first image sensor 121 and within the respective field of view of the second image sensor 122.

Again, the memory 702 contains the instructions executable by said processing circuit 704 whereby the computing apparatus 110 is operative for:

obtaining A110 preliminary calibration information for the system 100, wherein the preliminary calibration information indicates a preliminary three-dimensional rotation for the first image sensor 121 and the second image sensor 122 in relation to the fixed coordinate system 200;

obtaining A120 a plurality of point pairs, wherein each point pair of the plurality of point pairs represents a respective observation of the detected object 130 projected onto a respective two-dimensional image plane of each of the first image sensor 121 and the second image sensor 122; and

determining A130 the adjusted calibration information for the system 100 by solving A140 an optimization problem having an objective function that is dependent on the adjusted calibration information, wherein the objective function is formulated in terms of a reprojection error with respect to the plurality of point pairs, wherein the objective function further is formulated in terms of a difference measure, expressed in the fixed coordinate system 200, between triangulated distances and known distances, wherein the triangulated distances span between each of the first image sensor 121 and the second image sensor 122 and each of said at least one calibration object 140, and wherein the known distances span between each of the first image sensor 121 and the second image sensor 122 and each of said at least one calibration object 140.

Figure 7 further illustrates a carrier 705, or program carrier, which provides, such as comprises, mediates, supplies and the like, the computer program 703 as described directly above. The carrier 705 may be one of an electronic signal, an optical signal, a radio signal, a computer readable medium, a non-transitory computer readable medium, and a computer program product, and the like.

In some embodiments, the computing apparatus 110 and/or the processing unit 701 may comprise one or more of an obtaining unit 710, a determining unit 720, triangulating unit 730, an optimizing unit 740, a solving unit 750, an adjusting unit 760, a detecting unit 770, a translating unit 780, an updating unit 790 as exemplifying hardware units. The term "unit" may refer to a circuit when the term "unit" refers to a hardware unit. In other examples, one or more of the aforementioned exemplifying hardware units may be implemented as one or more software units.

Moreover, the computing apparatus 110 and/or the processing unit 701 may comprise an Input/Output unit 706, which may be exemplified by the receiving unit and/or the sending unit when applicable.

Accordingly, the computing apparatus 110 is configured for determining adjusted calibration information for a system 100. The system 100 comprises the computing apparatus 110, a first image sensor 121 and a second image sensor 122. Each image sensor of the first image sensor 121 and the second image sensor 122 is configured to capture respective two-dimensional information representing a detected object 130 travelling through a three-dimensional space within a respective field of view of said each image sensor. The adjusted calibration information indicates an adjusted three-dimensional rotation of each of the first image sensor 121 and the second image sensor 122 in relation to a fixed coordinate system 200 related to the three-dimensional space. At least one calibration object 140 is located within the respective field of view of the first image sensor 121 and within the respective field of view of the second image sensor 122.

Therefore, according to the various embodiments described above, the computing apparatus 110 and/or the processing unit 701 and/or the obtaining unit 710 is configured for obtaining preliminary calibration information for the system 100. The preliminary calibration information indicates a preliminary three-dimensional rotation for the first image sensor 121 and the second image sensor 122 in relation to the fixed coordinate system 200.

The computing apparatus 110 and/or the processing unit 701 and/or the obtaining unit 710 is configured for obtaining a plurality of point pairs. Each point pair of the plurality of point pairs represents a respective observation of the detected object 130 projected onto a respective two-dimensional image plane of each of the first image sensor 121 and the second image sensor 122.

The computing apparatus 110 and/or the processing unit 701 and/or the determining unit 720 is configured for determining the adjusted calibration information for the system 100 by solving an optimization problem having an objective function that is dependent on the adjusted calibration information. The objective function is formulated in terms of a reprojection error with respect to the plurality of point pairs. The objective function further is formulated in terms of a difference measure, expressed in the fixed coordinate system 200, between triangulated distances and known distances. The triangulated distances span between each of the first image sensor 121 and the second image sensor 122 and each of said at least one calibration object 140, and wherein the known distances span between each of the first image sensor 121 and the second image sensor 122 and each of said at least one calibration object 140.

In some examples, the difference measure is a dimensionless, relative measure between the triangulated distances and the known distances.

In some examples, the reprojection error is measured in units, such as pixels, of the image plane.

In some examples, an initial estimate for the optimization problem is based on the preliminary calibration information.

In some examples, the computing apparatus 110 is configured for solving the optimization problem by being configured for iteratively performing a set of actions including

triangulating an updated 3D position of said each point pair using the first and second image sensors 121, 122 and the adjusted calibration information,
determining an updated reprojection error for the detected object corresponding to said each point pair, and
optimizing the objective function to obtain the adjusted calibration information.

In some examples, the computing apparatus 110 and/or the processing unit 701 and/or the solving unit 750 can be configured for solving the optimization problem by being configured for iteratively performing the set of actions.

In some examples, the computing apparatus 110 and/or the processing unit 701 and/or the triangulating unit 730 can be configured for triangulating an updated 3D position of said each point pair using the first and second image sensors 121, 122 and the adjusted calibration information.

In some examples, the computing apparatus 110 and/or the processing unit 701 and/or the determining unit 720, or another determining unit (not shown), can be configured for determining an updated reprojection error for the detected object corresponding to said each point pair, and

In some examples, the computing apparatus 110 and/or the processing unit 701 and/or the optimizing unit 740 can be configured for optimizing the objective function to obtain the adjusted calibration information.

In some examples, the adjusted calibration information comprises an updated value for a relative three-dimensional rotation of the second image sensor 122 in relation to the first image sensor 121. The computing apparatus 110 and/or the processing unit 701 and/or the determining unit 720 can be configured for determining an updated value for a three-dimensional rotation of the first image sensor 121 in the fixed coordinate system 200 by that the computing apparatus 110 and/or the processing unit 701 and/or the solving unit 750 is configured for solving an equation system defined by relating a known three-dimensional position of the first image sensor 121 in the fixed coordinate system 200 to a known three-dimensional position of the second image sensor 122 in the fixed coordinate system 200 and to the updated value for the relative three-dimensional rotation of the second image sensor 122 in relation to the first image sensor 121, and by that the computing apparatus 110 and/or the processing unit 701 and/or the adjusting unit 760 is configured for adjusting a measure of a rotation of the first image sensor 121 about a first axis based on a difference between a known position in the fixed coordinate system 200 of said at least one calibration object 140 and a triangulated position of the calibration object 140. The triangulated position is determined using the first and second image sensors 121, 122, e.g., the locations thereof.

In some examples, the first image sensor 121 and the second image sensor 122 are arranged at a horizontal distance from each other, and wherein the computing apparatus 110 and/or the processing unit 701 and/or the adjusting unit 760 can be configured for adjusting the measure of the rotation of the first image sensor 121 by adjusting a measure of a tilt of the first image sensor 121.

In some examples, the optimizing of the objective function comprises minimizing the objective function to obtain the adjusted calibration information.

In some examples, the objective function is a loss function.

In some examples, the preliminary calibration information comprises a preliminary measure of the preliminary three-dimensional rotation of each of the first and second image sensors 121, 122 in relation to the fixed coordinate system

EP 4 742 159 A1

200. The computing apparatus 110 and/or the processing unit 701 and/or the determining unit 720 can be configured for determining the preliminary measure of the three-dimensional rotation of each of the first and second image sensors 121, 122 by that the computing apparatus 110 and/or the processing unit 701 and/or the determining unit 720 is configured for determining respective coordinates in the respective two-dimensional image plane of each of the first and second image sensors 121, 122 for each of said at least one calibration object 140, by that the computing apparatus 110 and/or the processing unit 701 and/or the solving unit 750 is configured for solving an equation system defined by relating the respective coordinates to a rotational and translational three-dimensional transformation of the second image sensor in relation to the first image sensor to obtain a value for a relative three-dimensional rotation of the second image sensor in relation to the first image sensor, and by that the computing apparatus 110 and/or the processing unit 701 and/or the obtaining unit 710 is configured for obtaining a value for a three-dimensional rotation of the first image sensor in the fixed coordinate system 200 by solving an equation system defined by relating a known three-dimensional position of the first image sensor in the fixed coordinate system 200 to a known three-dimensional position of the second image sensor in the fixed coordinate system 200 and to the updated value for the relative three-dimensional rotation of the second image sensor in relation to the first image sensor, and adjusting a measure of a rotation of the first image sensor about a first axis based on a difference between a known position in the fixed coordinate system 200 of a calibration object and a triangulated position of the calibration object, the triangulated position being determined using the first and second image sensors 121, 122.

In some examples, the computing apparatus 110 and/or the processing unit 701 and/or the determining unit 720 is configured for determining, e.g., initially and/or in the fixed coordinate system 200, a three-dimensional location of the first image sensor 121 and a three-dimensional location of the second image sensor 122.

The computing apparatus 110 and/or the processing unit 701 and/or the determining unit 720 can be configured for determining the three-dimensional location of the first and second image sensors 121, 122 by use of an electronic distance measurement device, such as an electronic transit theodolite device integrated with electronic distance measurement electronics, a total station, or the like.

In some examples, the adjusted calibration information comprises

an updated value for the three-dimensional location in the fixed coordinate system 200 of the first image sensor by relating a point on the first image sensor 121, the three-dimensional location in the fixed coordinate system 200 of which is known, to an optical center of the first image sensor 121 using an updated estimate regarding a three-dimensional rotation in the fixed coordinate system 200 of the first image sensor 121, and/or

an updated value for the three-dimensional location in the fixed coordinate system 200 of the second image sensor 122 by relating a point on the second image sensor 122, the three-dimensional location in the fixed coordinate system 200 of which is known, to an optical center of the second image sensor 122 using an updated estimate regarding a three-dimensional rotation in the fixed coordinate system 200 of the second image sensor 122.

In some examples, the computing apparatus 110 and/or the processing unit 701 and/or the detecting unit 770 is configured for detecting a change in rotation of the first and/or second image sensor 122, referred to as "present image sensor 121/122", between a first captured image of the present image sensor 121/122 and a second captured image of the present image sensor 121/122, the second captured image being captured after the first captured image. The computing apparatus 110 and/or the processing unit 701 and/or the determining unit 720 can be configured for determining, using manual input or an automatic image correlation procedure and expressed in units of the image plane of the present image sensor 121/122, an offset between the first and second captured images. The computing apparatus 110 and/or the processing unit 701 and/or the translating unit 780 can be configured for translating the offset into a corresponding rotation of the present image sensor 121/122. The computing apparatus 110 and/or the processing unit 701 and/or the updating unit 790 can be configured for updating the adjusted calibration information based on the corresponding rotation.

In some examples, the preliminary calibration information comprises a preliminary measure of the three-dimensional rotation of each of the first and second image sensors 121, 122 in relation to the fixed coordinate system 200. The computing apparatus 110 and/or the processing unit 701 and/or the determining unit 720 can be configured for determining the preliminary measure of the three-dimensional rotation of each of the first and second image sensors 121, 122 by that the computing apparatus 110 and/or the processing unit 701 and/or the determining unit 720 is configured for determining an expected location, in the image plane, of said at least one calibration object 140 with a known position in the fixed coordinate system 200. At least one of the first and second image sensors 121, 122 has a known position in the fixed coordinate system 200. Furthermore, by that the computing apparatus 110 and/or the processing unit 701 and/or the determining unit 720 is configured for determining, using manual input or an automatic image correlation procedure and expressed in units of the image plane, an offset of said at least one calibration object 140 based on an image captured by the present image sensor 121/122 and the expected location. The computing apparatus 110 and/or the processing unit 701 and/or the translating unit 780 can be configured for translating the offset into a corresponding rotation of the present image sensor 121/122.

The computing apparatus 110 and/or the processing unit 701 and/or the determining unit 720 can be configured for determining the preliminary measure of the three-dimensional rotation of the present image sensor 121/122 based on the corresponding rotation.

In some examples, the computing apparatus 110 and/or the processing unit 701 and/or the determining unit 720 is configured for determining an expected location, in the image plane, of at least one calibration object 140 with a known position in the fixed coordinate system 200, using a known position in the fixed coordinate system 200 of the present image sensor 121/122. The computing apparatus 110 and/or the processing unit 701 and/or the detecting unit 770 can be configured for detecting, using manual input or an automatic image correlation procedure and expressed in units of the image plane, an offset of said at least one calibration object 140 based on an image captured by the present image sensor 121/122 and the corresponding expected location. The computing apparatus 110 and/or the processing unit 701 and/or the triangulating unit 780 can be configured for triangulating, using the offset, an updated 3D position in the fixed coordinate system 200 of said at least one calibration object 140. The computing apparatus 110 and/or the processing unit 701 and/or the determining unit 720 can be configured for determining the adjusted calibration information based on the triangulated 3D position in the fixed coordinate system 200 of said at least one calibration object 140 instead of a known 3D position in the fixed coordinate system 200 of said at least one calibration object 140.

About optimization in general

Optimization is a fundamental concept widely used in various fields such as mathematics, computer science, and engineering, where the goal is to identify the best possible solution to a problem by adjusting certain variables within predefined constraints. It typically involves either maximizing or minimizing a specific function, depending on the nature of the problem at hand.

In some cases, the objective of optimization is to maximize a gain function. Here, the aim is to achieve the highest possible value of a function that represents a reward, benefit, or other forms of positive outcome. This is commonly seen in applications involving profit maximization, resource allocation, or system performance improvement. For example, a gain function may represent a company's profit as a function of production levels, with the optimization goal being to determine the production quantity that yields the highest profit.

Conversely, optimization problems often focus on minimizing a cost or loss function. In this context, the function represents some form of cost, error, or negative outcome that should be minimized. This is prevalent in areas such as expense reduction, error minimization in predictive models, or efficiency optimization in energy usage. For instance, in the field of machine learning, a loss function measures the discrepancy between predicted and actual values, and the objective is to minimize this loss to improve the accuracy of the model.

To address both types of problems, the term objective function is commonly used as a generic expression for the function that needs to be optimized. Hence, the objective function can be a loss function, a gain function, or the like. Whether the goal is to maximize a gain or minimize a loss, the objective function serves as the target function for optimization. The process of optimization, therefore, involves adjusting the inputs or parameters (decision variables) of the objective function to achieve the best possible result, depending on whether a maximization or minimization goal is pursued. This framework underpins a wide array of optimization problems across different technical and industrial domains.

In view of the above, it can be said that, e.g., the computing apparatus 110 iteratively determines an updated value, as an example of something that should be determined. The iteratively determining is performed under, such as subject to, or the like, a constraint that the objective function should be satisfy, such as meet, or the like, a condition for allowed threshold. E.g., the objective function is said to be optimized, minimized, or maximized, when said threshold is met. Expressed somewhat differently, the computing apparatus 110 can iteratively determine the updated value by solving an equation system dependent on variables, aka decision variables in related literature, of the objective function, while satisfying the constraint, thereby obtaining the updated value.

As used herein, the term "unit" may refer to one or more functional units, each of which may be implemented as one or more hardware units and/or one or more software units and/or a combined software/hardware unit in a node. In some examples, the unit may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing unit" can include one or more hardware units, one or more software units or a combination thereof.

As used herein, the term "software unit" may refer to a software application, a Dynamic Link Library (DLL), a software component, a software module, a software object, a React component, an object according to Component Object Model (COM), a software function, a software engine, an executable binary software file or the like.

The terms "processing unit" or "processing circuit" may herein comprise one or more processors, an Application Specific Integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a Digital Versatile Disc (DVD), a Blu-ray disc, a software unit that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

Any feature disclosed for one example and/or embodiment may be combined with one or more features disclosed for one or more other examples and/or embodiments without departing from the scope herein.

Examples: Although the present application is defined in the attached claims, it should be understood that the present invention can also be (alternatively) defined in accordance with the following examples:

Example 1: A method, performed by a computing apparatus (110), for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of said each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), wherein the method comprises:

obtaining (A110) preliminary calibration information for the system (100), wherein the preliminary calibration information indicates a preliminary three-dimensional rotation for the first image sensor (121) and the second image sensor (122) in relation to the fixed coordinate system (200);
obtaining (A120) a plurality of point pairs, wherein each point pair of the plurality of point pairs represents a respective observation of the detected object (130) projected onto a respective two-dimensional image plane of each of the first image sensor (121) and the second image sensor (122); and
determining (A130) the adjusted calibration information for the system (100) by solving (A140) an optimization problem having an objective function that is dependent on the adjusted calibration information, wherein the objective function is formulated in terms of a reprojection error with respect to the plurality of point pairs, wherein the objective function further is formulated in terms of a difference measure, expressed in the fixed coordinate system (200), between triangulated distances and known distances, wherein the triangulated distances span between each of the first image sensor (121) and the second image sensor (122) and each of said at least one calibration object (140), and wherein the known distances span between each of the first image sensor (121) and the second image sensor (122) and each of said at least one calibration object (140).

Example 2: The method according to Example 1, wherein the difference measure is a dimensionless, relative measure between the triangulated distances and the known distances.

Example 3: The method according to Example 1 or 2, wherein the reprojection error is measured in units, such as pixels, of the image plane.

Example 4: The method according to any preceding Example, wherein an initial estimate for the optimization problem is based on the preliminary calibration information.

Example 5: The method according to any preceding Example, wherein the solving (A140) of the optimization problem comprises iteratively performing (A150) a set of actions including:

triangulating (A151) an updated 3D position of said each point pair using the first and second image sensors (121, 122) and the adjusted calibration information;
determining (A153) an updated reprojection error for the detected object corresponding to said each point pair; and
optimizing (A155) the objective function to obtain the adjusted calibration information.

Example 6: The method according to Example 5, wherein the adjusted calibration information comprises an updated value for a relative three-dimensional rotation of the second image sensor (122) in relation to the first image sensor (121), and wherein the method comprises

determining (A160) an updated value for a three-dimensional rotation of the first image sensor (121) in the fixed coordinate system (200) by
solving (A164) an equation system defined by relating a known three-dimensional position of the first image sensor (121) in the fixed coordinate system (200) to a known three-dimensional position of the second image sensor (122) in the fixed coordinate system (200) and to the updated value for the relative three-dimensional rotation of the second image sensor (122) in relation to the first image sensor (121); and
adjusting (A168) a measure of a rotation of the first image sensor (121) about a first axis based on a difference between a known position in the fixed coordinate system (200) of said at least one calibration object (140) and a triangulated position of the calibration object (140), wherein the triangulated position is determined using the first and second image sensors (121, 122), e.g., the locations thereof.

Example 7: The method according to Example 6, wherein the first image sensor (121) and the second image sensor (122) are arranged at a horizontal distance from each other, and wherein the adjusting (A168) of the measure of the rotation of the first image sensor (121) is an adjustment of a measure of a tilt of the first image sensor (121).

Example 8: The method according to any one of Examples 5-7, wherein the optimizing of the objective function comprises minimizing the objective function to obtain the adjusted calibration information.

Example 9: The method according to any preceding Example, wherein the objective function is a loss function.

Example 10: The method according to any preceding Example, wherein the preliminary calibration information comprises a preliminary measure of the preliminary three-dimensional rotation of each of the first and second image sensors (121, 122) in relation to the fixed coordinate system (200), and wherein the method comprises:

determining (A170) the preliminary measure of the three-dimensional rotation of each of the first and second image sensors (121, 122) by performing the steps
determining (A180) respective coordinates in the respective two-dimensional image plane of each of the first and second image sensors (121, 122) for each of said at least one calibration object (140);
solving (A190) an equation system defined by relating the respective coordinates to a rotational and translational three-dimensional transformation of the second image sensor in relation to the first image sensor to obtain a value for a relative three-dimensional rotation of the second image sensor in relation to the first image sensor; and
obtaining (A200) a value for a three-dimensional rotation of the first image sensor in the fixed coordinate system (200) by solving an equation system defined by relating a known three-dimensional position of the first image sensor in the fixed coordinate system (200) to a known three-dimensional position of the second image sensor in the fixed coordinate system (200) and to the updated value for the relative three-dimensional rotation of the second image sensor in relation to the first image sensor; and adjusting a measure of a rotation of the first image sensor about a first axis based on a difference between a known position in the fixed coordinate system (200) of a calibration object and a triangulated position of the calibration object, the triangulated position being determined using the first and second image sensors (121, 122).

Example 11: The method according to any preceding Example, further comprising:
determining (A105), in the fixed coordinate system (200), a three-dimensional location of the first image sensor (121) and a three-dimensional location of the second image sensor (122).

Example 12: The method according to Example 11, wherein

the determining (A105) of the three-dimensional location of the first and second image sensors (121, 122) is performed using an electronic distance measurement device.

Example 13: The method according to Example 11 or 12, wherein the adjusted calibration information comprises:

an updated value for the three-dimensional location in the fixed coordinate system (200) of the first image sensor by relating a point on the first image sensor (121), the three-dimensional location in the fixed coordinate system (200) of which is known, to an optical center of the first image sensor (121) using an updated estimate regarding a three-dimensional rotation in the fixed coordinate system (200) of the first image sensor (121), and/or

an updated value for the three-dimensional location in the fixed coordinate system (200) of the second image sensor (122) by relating a point on the second image sensor (122), the three-dimensional location in the fixed coordinate system (200) of which is known, to an optical center of the second image sensor (122) using an updated estimate regarding a three-dimensional rotation in the fixed coordinate system (200) of the second image sensor (122).

Example 14: The method according to any preceding Example, further comprising

detecting (A210) a change in rotation of the first and/or second image sensor (122), referred to as "present image sensor (121/122)", between a first captured image of the present image sensor (121/122) and a second captured image of the present image sensor (121/122), the second captured image being captured after the first captured image;

determining (A220), using manual input or an automatic image correlation procedure and expressed in units of the image plane of the present image sensor (121/122), an offset between the first and second captured images;

translating (A230) the offset into a corresponding rotation of the present image sensor (121/122); and

updating (A240) the adjusted calibration information based on the corresponding rotation.

Example 15: The method according to the preceding Example, wherein the preliminary calibration information comprises a preliminary measure of the three-dimensional rotation of each of the first and second image sensors (121, 122) in relation to the fixed coordinate system (200), and wherein the method comprises

determining (A250) the preliminary measure of the three-dimensional rotation of each of the first and second image sensors (121, 122) by

determining (A252) an expected location, in the image plane, of said at least one calibration object (140) with a known position in the fixed coordinate system (200), wherein at least one of the first and second image sensors (121, 122) has a known position in the fixed coordinate system (200);

determining (A254), using manual input or an automatic image correlation procedure and expressed in units of the image plane, an offset of said at least one calibration object (140) based on an image captured by the present image sensor (121/122) and the expected location;

translating (A256) the offset into a corresponding rotation of the present image sensor (121/122); and

determining (A258) the preliminary measure of the three-dimensional rotation of the present image sensor (121/122) based on the corresponding rotation.

Example 16: The method according to Example 14 or 15, further comprising

determining (A260) an expected location, in the image plane, of at least one calibration object (140) with a known position in the fixed coordinate system (200), using a known position in the fixed coordinate system (200) of the present image sensor (121/122);

detecting (A262), using manual input or an automatic image correlation procedure and expressed in units of the image plane, an offset of said at least one calibration object (140) based on an image captured by the present image sensor (121/122) and the corresponding expected location;

triangulating (A264), using the offset, an updated 3D position in the fixed coordinate system (200) of said at least one calibration object (140); and

determining (A266) the adjusted calibration information based on the triangulated 3D position in the fixed coordinate system (200) of said at least one calibration object (140) instead of a known 3D position in the fixed coordinate system (200) of said at least one calibration object (140).

Example 17: A computing apparatus (110) configured for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of said each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), wherein the computing apparatus (110) is configured for:

> obtaining preliminary calibration information for the system (100), wherein the preliminary calibration information indicates a preliminary three-dimensional rotation for the first image sensor (121) and the second image sensor (122) in relation to the fixed coordinate system (200);
> obtaining a plurality of point pairs, wherein each point pair of the plurality of point pairs represents a respective observation of the detected object (130) projected onto a respective two-dimensional image plane of each of the first image sensor (121) and the second image sensor (122); and
> determining the adjusted calibration information for the system (100) by solving (A140) an optimization problem having an objective function that is dependent on the adjusted calibration information, wherein the objective function is formu-lated in terms of a reprojection error with respect to the plurality of point pairs, wherein the objective function further is formulated in terms of a difference measure, expressed in the fixed coordinate system (200), between triangulated distances and known distances, wherein the triangulated distances span between each of the first image sensor (121) and the second image sensor (122) and each of said at least one calibration object (140), and wherein the known distances span between each of the first image sensor (121) and the second image sensor (122) and each of said at least one calibration object (140).

Example 18: A computer program product (905) for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of said each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), the computer program product (905) comprising a non-transitory computer readable storage medium having program instructions embodied therewith, the program instructions executable by a computing apparatus (110) to cause the computing apparatus (110) to:

> obtain preliminary calibration information for the system (100), wherein the preliminary calibration information indicates a preliminary three-dimensional rotation for the first image sensor (121) and the second image sensor (122) in relation to the fixed coordinate system (200);
> obtain a plurality of point pairs, wherein each point pair of the plurality of point pairs represents a respective observation of the detected object (130) projected onto a respective two-dimensional image plane of each of the first image sensor (121) and the second image sensor (122); and
> determine the adjusted calibration information for the system (100) by solving (A140) an optimization problem having an objective function that is dependent on the adjusted calibration information, wherein the objective function is formulated in terms of a reprojection error with respect to the plurality of point pairs, wherein the objective function further is formulated in terms of a difference measure, expressed in the fixed coordinate system (200), between triangulated distances and known distances, wherein the triangulated distances span between each of the first image sensor (121) and the second image sensor (122) and each of said at least one calibration object (140), and wherein the known distances span between each of the first image sensor (121) and the second image sensor (122) and each of said at least one calibration object (140).

## Claims

1. A method, performed by a computing apparatus (110), for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), wherein the method comprises:

> obtaining (A110) preliminary calibration information for the system (100), wherein the preliminary calibration information indicates a preliminary three-dimensional rotation for the first image sensor (121) and the second image sensor (122) in relation to the fixed coordinate system (200);
> obtaining (A120) a plurality of point pairs, wherein each point pair of the plurality of point pairs represents a respective observation of the detected object (130) projected onto a respective two-dimensional image plane of each of the first image sensor (121) and the second image sensor (122); and
> determining (A130) the adjusted calibration information for the system (100) by solving (A140) an optimization problem having an objective function that is dependent on the adjusted calibration information, wherein the objective function is formulated in terms of a reprojection error with respect to the plurality of point pairs, wherein the objective function further is formulated in terms of a difference measure, expressed in the fixed coordinate system (200), between triangulated distances and known distances, wherein the triangulated distances span between each of the first image sensor (121) and the second image sensor (122) and each of the at least one calibration object (140), and wherein the known distances span between each of the first image sensor (121) and the second image sensor (122) and each of the at least one calibration object (140).

2. The method according to claim 1, wherein the difference measure is a dimensionless, relative measure between the triangulated distances and the known distances.

3. The method according to claim 1 or 2, wherein the reprojection error is measured in units, such as pixels, of the image plane.

4. The method according to any preceding claim, wherein an initial estimate for the optimization problem is based on the preliminary calibration information.

5. The method according to any preceding claim, wherein the solving (A140) of the optimization problem comprises iteratively performing (A150) a set of actions including:

> triangulating (A151) an updated three-dimensional position of each point pair of the plurality of point pairs using the first and second image sensors (121, 122) and the adjusted calibration information;
> determining (A153) an updated reprojection error for the detected object (130) corresponding to each point pair; and
> optimizing (A155) the objective function to obtain the adjusted calibration information.

6. The method according to claim 5, wherein the adjusted calibration information comprises an updated value for a relative three-dimensional rotation of the second image sensor (122) in relation to the first image sensor (121), and wherein the method comprises:

> determining (A160) an updated value for a three-dimensional rotation of the first image sensor (121) in the fixed coordinate system (200) by
> solving (A164) an equation system defined by relating a known three-dimensional position of the first image sensor (121) in the fixed coordinate system (200) to a known three-dimensional position of the second image sensor (122) in the fixed coordinate system (200) and to the updated value for the relative three-dimensional rotation of the second image sensor (122) in relation to the first image sensor (121); and
> adjusting (A168) a measure of a rotation of the first image sensor (121) about a first axis based on a difference between a known position in the fixed coordinate system (200) of the at least one calibration object (140) and a triangulated position of the at least one calibration object (140), wherein the triangulated position is determined using the first and second image sensors (121, 122), e.g., the locations thereof, optionally wherein the first image sensor (121) and the second image sensor (122) are arranged at a horizontal distance from each other, and wherein the adjusting (A168) of the measure of the rotation of the first image sensor (121) is an adjustment of a measure of a tilt of the first image sensor (121).

7. The method according to any one of claims 5-6, wherein the optimizing of the objective function comprises minimizing the objective function to obtain the adjusted calibration information, optionally wherein the objective function is a loss function.

8. The method according to any preceding claim, wherein the preliminary calibration information comprises a preliminary measure of the preliminary three-dimensional rotation of each of the first and second image sensors (121, 122) in relation to the fixed coordinate system (200), and wherein the method comprises:
determining (A170) the preliminary measure of the three-dimensional rotation of each of the first and second image sensors (121, 122) by

determining (A180) respective coordinates in the respective two-dimensional image plane of each of the first and second image sensors (121, 122) for each of the at least one calibration object (140);
solving (A190) an equation system defined by relating the respective coordinates to a rotational and translational three-dimensional transformation of the second image sensor in relation to the first image sensor to obtain a value for a relative three-dimensional rotation of the second image sensor in relation to the first image sensor; and
obtaining (A200) a value for a three-dimensional rotation of the first image sensor in the fixed coordinate system (200) by
solving an equation system defined by relating a known three-dimensional position of the first image sensor in the fixed coordinate system (200) to a known three-dimensional position of the second image sensor in the fixed coordinate system (200) and to the updated value for the relative three-dimensional rotation of the second image sensor in relation to the first image sensor; and
adjusting a measure of a rotation of the first image sensor about a first axis based on a difference between a known position in the fixed coordinate system (200) of a calibration object of the at least one calibration object and a triangulated position of the calibration object, the triangulated position being determined using the first and second image sensors (121, 122).

9. The method according to any preceding claim, further comprising:

determining (A105), in the fixed coordinate system (200), a three-dimensional location of the first image sensor (121) and a three-dimensional location of the second image sensor (122), optionally wherein
the determining (A105) of the three-dimensional location of the first and second image sensors (121, 122) is performed using an electronic distance measurement device.

10. The method according to claim 9, wherein the adjusted calibration information comprises:

an updated value for the three-dimensional location in the fixed coordinate system (200) of the first image sensor by relating a point on the first image sensor (121), the three-dimensional location in the fixed coordinate system (200) of which is known, to an optical center of the first image sensor (121) using an updated estimate regarding a three-dimensional rotation in the fixed coordinate system (200) of the first image sensor (121),
and/or
an updated value for the three-dimensional location in the fixed coordinate system (200) of the second image sensor (122) by relating a point on the second image sensor (122), the three-dimensional location in the fixed coordinate system (200) of which is known, to an optical center of the second image sensor (122) using an updated estimate regarding a three-dimensional rotation in the fixed coordinate system (200) of the second image sensor (122).

11. The method according to any preceding claim, further comprising:

detecting (A210) a change in rotation of the first and/or second image sensor (121, 122), referred to as "present image sensor (121/122)", between a first captured image of the present image sensor (121/122) and a second captured image of the present image sensor (121/122), the second captured image being captured after the first captured image;
determining (A220), using manual input or an automatic image correlation procedure and expressed in units of the image plane of the present image sensor (121/122), an offset between the first and second captured images;
translating (A230) the offset into a corresponding rotation of the present image sensor (121/122); and
updating (A240) the adjusted calibration information based on the corresponding rotation.

12. The method according to the preceding claim, wherein the preliminary calibration information comprises a preliminary measure of the three-dimensional rotation of each of the first and second image sensors (121, 122) in relation to the fixed coordinate system (200), and wherein the method comprises:

determining (A250) the preliminary measure of the three-dimensional rotation of each of the first and second image sensors (121, 122) by

determining (A252) an expected location, in the image plane, of the at least one calibration object (140) with a known position in the fixed coordinate system (200), wherein at least one of the first and second image sensors (121, 122) has a known position in the fixed coordinate system (200);
determining (A254), using manual input or an automatic image correlation procedure and expressed in units of the image plane, an offset of the at least one calibration object (140) based on an image captured by the present image sensor (121/122) and the expected location;
translating (A256) the offset into a corresponding rotation of the present image sensor (121/122); and
determining (A258) the preliminary measure of the three-dimensional rotation of the present image sensor (121/122) based on the corresponding rotation.

13. The method according to claim 11 or 12, further comprising:

determining (A260) an expected location, in the image plane, of at least one calibration object (140) with a known position in the fixed coordinate system (200), using a known position in the fixed coordinate system (200) of the present image sensor (121/122);
detecting (A262), using manual input or an automatic image correlation procedure and expressed in units of the image plane, an offset of the at least one calibration object (140) based on an image captured by the present image sensor (121/122) and the corresponding expected location;
triangulating (A264), using the offset, an updated three-dimensional position in the fixed coordinate system (200) of the at least one calibration object (140); and
determining (A266) the adjusted calibration information based on the triangulated three-dimensional position in the fixed coordinate system (200) of the at least one calibration object (140) instead of a known 3D position in the fixed coordinate system (200) of the at least one calibration object (140).

14. A computing apparatus (110) configured for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), wherein the computing apparatus (110) is configured to perform the method of any one of claims 1 to 13.

15. A computer program product (905) for determining adjusted calibration information for a system (100), wherein the system (100) comprises the computing apparatus (110), a first image sensor (121) and a second image sensor (122), wherein each image sensor of the first image sensor (121) and the second image sensor (122) is configured to capture respective two-dimensional information representing a detected object (130) travelling through a three-dimensional space within a respective field of view of each image sensor, wherein the adjusted calibration information indicates an adjusted three-dimensional rotation of each of the first image sensor (121) and the second image sensor (122) in relation to a fixed coordinate system (200) related to the three-dimensional space, wherein at least one calibration object (140) is located within the respective field of view of the first image sensor (121) and within the respective field of view of the second image sensor (122), the computer program product (905) comprising a non-transitory computer readable storage medium having program instructions embodied therewith, the program instructions executable by a computing apparatus (110) to cause the computing apparatus (110) to perform the method of any one of claims 1 to 13.

Fig. 1

Fig. 2

Fig. 3

Fig. 4

Fig. 5

Fig. 6

**705 Carrier**

**110 Computing apparatus**

701 Processing unit

704 Processing circuit

702 Memory

710 Obtaining unit

720 Determining unit

730 Triangulating unit

740 Optimizing unit

706 I/O unit

750 Solving unit

760 Adjusting unit

770 Detecting unit

780 Translating unit

790 Updating unit

703 Computer program

Fig. 7

# EUROPEAN SEARCH REPORT

**Application Number**

EP 25 21 5182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/035000 A1 (SØNDERGAARD THOMAS [DK] ET AL) 3 February 2022 (2022-02-03) * paragraphs [0038], [0045] - [0064]; figures 4-6,7a-7b * | 1-15 | INV.<br>G06T7/80 |
| A | US 2022/284628 A1 (TUXEN FREDRIK [DK] ET AL) 8 September 2022 (2022-09-08) * paragraphs [0193] - [0201]; figures 10c, 16g * | 1-15 | |
| A | Beschi Riccardo ET AL: "Stereo camera system calibration: the need of two sets of parameters", , 14 January 2021 (2021-01-14), pages 1-7, XP093213998, Retrieved from the Internet: URL:https://arxiv.org/pdf/2101.05725 * abstract * * sections 4.2, 4.2.1 * | 1-15 | |
| A | US 2012/220385 A1 (RICHARDSON TODD E [CA] ET AL) 30 August 2012 (2012-08-30) * paragraph [0052]; figures 1,4,7 * | 1-15 | **TECHNICAL FIELDS SEARCHED (IPC)**<br><br>G06T |

The present search report has been drawn up for all claims

| Place of search | Date of completion of the search | Examiner |
|---|---|---|
| Munich | 20 February 2026 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5182

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | Publication date | Patent family member(s) | Publication date |
|---|---|---|---|
| US 2022035000 A1 | 03-02-2022 | US 2022035000 A1 | 03-02-2022 |
| | | US 2023204720 A1 | 29-06-2023 |
| US 2022284628 A1 | 08-09-2022 | EP 4302265 A1 | 10-01-2024 |
| | | EP 4302266 A1 | 10-01-2024 |
| | | JP 2024508136 A | 22-02-2024 |
| | | JP 2024508137 A | 22-02-2024 |
| | | KR 20230154002 A | 07-11-2023 |
| | | KR 20230154420 A | 08-11-2023 |
| | | US 2022280855 A1 | 08-09-2022 |
| | | US 2022284625 A1 | 08-09-2022 |
| | | US 2022284628 A1 | 08-09-2022 |
| | | US 2022288481 A1 | 15-09-2022 |
| | | US 2025135316 A1 | 01-05-2025 |
| | | WO 2022185276 A1 | 09-09-2022 |
| | | WO 2022185278 A1 | 09-09-2022 |
| US 2012220385 A1 | 30-08-2012 | AT E484322 T1 | 15-10-2010 |
| | | AU 2006203250 A1 | 22-02-2007 |
| | | CA 2552212 A1 | 02-02-2007 |
| | | EP 1749555 A1 | 07-02-2007 |
| | | JP 6247817 B2 | 13-12-2017 |
| | | JP 2007038000 A | 15-02-2007 |
| | | JP 2013063291 A | 11-04-2013 |
| | | US 2006063574 A1 | 23-03-2006 |
| | | US 2012220385 A1 | 30-08-2012 |

EPO FORM P0459

For more details about this annex : see Official Journal of the European Patent Office, No. 12/82